# EUROPEAN PATENT APPLICATION

(11) **EP 3 093 277 A1**
(43) Date of publication of application: **16.11.2016**
(21) Application number: 16162668.4
(22) Date of filing: 29.03.2016
(51) Int. Cl.: C03C 17/32, B41M 1/34, B44C 1/10, B44C 1/14, B44C 1/17, B41M 7/00, C03C 17/38, C03C 23/00, C09D 11/101

(54) **METHOD OF APPLYING RELIEF DESIGNS TO GLASS ARTICLES WITH PLAIN OR COATED SURFACES AND A UV PRIMER THEREFORE**

(30) Priority: 29.04.2015 CZ 20150299
(71) Applicant: Heinz Glas Decor s.r.o., 35124 Hranice (CZ)
(72) Inventor: Wissing, Orson, 35124 Hranice (CZ)
(74) Representative: Langrova, Irena

(57) **Abstract**

The method of applying relief designs to glass articles with plain or coated surfaces involves placing the articles on a moving support in a decorating line. A coating of UV primer in the shape of the desired design is applied onto the articles by screen printing. The UV primer is pre-polymerized by exposure to UV radiation and remains partially cured and tacky. In one of the steps preceding the application of the UV primer, the surface of the article is flame or plasma-treated using a gas or plasma jet. In the last step, hot stamping foil is applied and attached to the design by hot stamping.

In an advantageous variant, the surface tension of the article after flame or plasma treatment is within 42-56 N/m. In addition, the surface of the article may be treated with ionized air immediately before the UV primer is applied. The UV radiation may be emitted by a lamp with a gallium additive or with an iron additive.

The UV primer contains 5-8 weight percent curing agent, 5-15 weight percent thinner and 1-3 weight percent antifoamer. The balance is transparent UV-curable lacquer.

## Description

### Technical Field

This invention relates to applying relief designs to glass articles with plain or coated surfaces by hot stamping.

### Background Art

In perfume or cosmetic industries, glass articles with plain or coated surfaces such as perfume flacons are ordinarily decorated with relief designs or with designs with an appearance of shiny metal resembling gold or silver. Generally, these articles may have various shapes, being round, flat, oval-shaped or other.

Designs of this kind can be applied onto glass articles using rudimentary methods where the operator places the articles into a screen printing machine which, in the first step, deposits on each article an underlayer of an organic two-component ink according to a pre-existing sketch. The operator then places the articles one by one on a conveyor which runs through a drying tunnel where pre-polymerization is effected which causes the ink to become adequately dry while remaining slightly tacky on the surface. The passing time of the articles through the drying tunnel is rather long, approximately 15-20 minutes.

After these articles exit the tunnel, the operator places them into a hot stamping machine where a paper layer is transferred by adhering to the ink deposited on each article. The paper layer remains attached only to the screen-printed artwork. These articles with metallic relief designs in the form of lettering or resembling glued artwork are then placed in their final packaging. The sequence of these operations with this type of equipment is lengthy which results in low production speeds; and multiple handling operations pose a high risk of damage.

Furthermore, the temperature in the drying tunnel is an important variable because a very narrow temperature interval is required; maintaining a practically constant temperature is demanding due to the air flow present; and regulating the heating elements of the furnace which heat the drying tunnel is difficult. Articles baked at temperatures outside this interval are defective.

For the above reasons, there are efforts to automate the decorating process to a greater extent and to deploy new technologies to eliminate process pauses and time-consuming operations. One such method is described in the FR 2958210A1 patent file. In this method, the articles are placed on a support by which they are transported continuously through a decorating line. Onto each article, a design of UV primer is applied by screen printing. The UV primer in this design is then pre-polymerized by UV light. The surface of the UV primer then remains slightly tacky. In the next step, a layer of paper is applied by a hot process onto the design on each article. In the last step, final polymerization of the design is accomplished by UV radiation.

The primary disadvantage of this procedure is the need for the final UV irradiation of the article with the paper layer in order to accomplish the final polymerization of the UV primer. This step makes the production more time-consuming, more energy-intensive and, in some cases, requires that the decorating line be equipped with at least two UV radiation sources.

The above-described disadvantages are, to a great extent, eliminated by the present invention.

### Disclosure of Invention

The invention relates to a method of applying relief designs to glass articles with plain or coated surfaces. The articles are placed on a moving support in a decorating line, transported continuously through the decorating line, and a coating of UV primer shaped as the desired design is applied onto the articles by screen printing. In this context, the term UV primer denotes a UV ink which can be applied by screen printing. One of the steps involves pre-polymerization of the UV primer by exposure to UV radiation. After this step, the UV primer remains only partially cured and is still tacky.

The essence is that in one of the steps preceding the application of the UV primer, the surface of the articles is flame or plasma-treated using a gas or plasma jet. In the last step, hot stamping foil is applied and attached to the design (i.e. to the UV primer coating in the shape of the design) by hot stamping. The foil may be metallized or coloured. Hence, the finished design is an area which has been improved by application of hot-stamping foil. The design may be shaped as a letter, image, logo, line or dots.

To apply the UV primer effectively, it is advantageous to have the surface tension of the article after flame or plasma treatment in the range of 42-56 N/m.

An advantageous variant involves a step wherein the surface of the article is treated with ionized air immediately before the UV primer is applied.

In order to improve the curing process of the UV primer, it is advantageous to use UV radiation emitted by a lamp with a gallium additive or an iron additive. This results in better curing of the UV primer.

A related invention is the composition of the UV primer which is advantageous for the above-describe method of applying relief designs to glass articles with plain or coated surfaces. The UV primer contains liquid monomers and polymers, 5-8 weight percent curing agent, 5-15 weight percent thinner, 1-3 weight percent antifoamer and balance of transparent UV-curable lacquer.

### Best Mode for Carrying Out the Invention

The best mode of applying relief designs to glass articles with plain or coated surfaces involves placing the articles to be decorated on a moving support in a decorating line. On this support, the articles are transported continuously through the decorating line. In the decorating line, the surface of the articles is flame-treated using a gas jet. In this case, the surface tension of the articles upon the treatment is within the range of 42-56 N/m. This technical preparation of the article surface by flame treatment is a prerequisite for successful application of the UV primer by screen printing. The flame treatment provides a consistent and defined surface which is free from organic contaminants and water vapour. In this case, the surface of the articles is then treated with ionized air. As a result, the article to be decorated ceases to attract dust particles and its surface remains clean. Immediately thereafter, a UV primer coating in the shape of the desired design is applied onto the article by screen printing. The UV primer is then pre-polymerised, or partially polymerised, by exposure to UV radiation. In this case, the UV radiation is emitted by a lamp with a gallium additive. Thanks to the gallium additive, the UV primer develops a smooth surface. After this step is completed, the UV primer remains only partially cured and is still tacky. In the last step, hot stamping foil is applied and attached to the design by hot stamping.

The UV primer which is usable for the above-described relief decorating process for glass articles with plain or coated surfaces contains liquid monomers and polymers. Specifically, it contains 5-8 weight percent curing agent, 5-15 weight percent thinner and 1-3 weight percent antifoamer. The balance is transparent UV-curable lacquer. The curing agent accelerates the UV reaction and imparts stability to the applied UV primer. The antifoamer removes air bubbles from the UV primer.

The advantage of the present invention lies in producing a finished product (i.e. an article with an applied design) without waiting times. Drying in a furnace or the second exposure to UV light are not required as process steps, which translates into energy and time savings. The finished design has better resistance to chemicals and exhibits a very smooth surface. It successfully passes tests by perfume extract or acetone and is thus particularly well suited for flacons for perfumes and cosmetic products.

## Claims

1. A method of applying relief designs to glass articles with plain or coated surfaces wherein the articles are placed on a moving support in a decorating line, transported continuously through the decorating line, and onto them a coating of UV primer shaped as the desired design is applied by screen printing and subsequently pre-polymerised by exposure to UV radiation, which renders this UV primer partially cured and tacky, **characterized in that**
in one of the steps preceding the application of the UV primer, the surface of the article is flame or plasma-treated using a gas or plasma jet,
and in the last step, hot stamping foil is applied and attached to the design by hot stamping.

2. The method of applying relief designs to glass articles with plain or coated surfaces according to Claim 1 **characterized in that** the surface tension of the article after flame or plasma treatment is in the range of 42-56 N/m.

3. The method of applying relief designs to glass articles with plain or coated surfaces according to Claim 1 or Claim 2 **characterized in that** the surface of the article is treated with ionized air immediately before the UV primer is applied.

4. The method of applying relief designs to glass articles with plain or coated surfaces according to any of the preceding claims **characterized in that** the UV radiation is emitted by a lamp with a gallium additive or by a lamp with an iron additive

5. A UV primer which can be used to advantage for the relief decorating process of glass articles with plain or coated surfaces according to any of the preceding Claims and which contains liquid monomers and polymers **characterized in that** it contains 5-8 weight percent curing agent, 5-15 weight percent thinner, 1-3 weight percent antifoamer
and the balance is transparent UV-curable lacquer.
